# EUROPEAN PATENT SPECIFICATION

(11) **EP 1 745 665 B1**
(45) Date of publication and mention of the grant of the patent: **30.09.2009**
(21) Application number: 04732079.1
(22) Date of filing: 11.05.2004
(51) Int. Cl.: H04W 24/00

(54) **METHOD OF TESTING A CELLULAR NETWORK SYSTEM**
VERFAHREN ZUM TESTEN EINES ZELLULAREN NETZWERKSYSTEMS
PROCEDE PERMETTANT DE TESTER UN SYSTEME DE RESEAU CELLULAIRE

(43) Date of publication of application: 24.01.2007
(73) Proprietor: Ascom AG, 3000 Bern 14 (CH)
(72) Inventor: WU, Raymond, CH-3185 Schmitten (CH)
(74) Representative: Rüfenacht, Philipp Michael
(86) International application number: PCT/CH2004/000285
(87) International publication number: WO 2005/109932

(56) References cited:
- EP-A- 1 267 584
- US-A- 5 394 540
- US-A1- 2002 072 358

## Description

### Technical Field

The invention relates to a method of testing a cellular network system in which setting up a communication link between two subscribers starts with a negotiation phase comprising the steps of one of the subscribers sending a request for a connection with the other subscriber to a network management and of the network management sending back an answer to the subscriber, whereon the link can be established if the network management's answer satisfies certain conditions. The invention further relates to a device for testing a cellular network system and to a cellular network system.

### Background Art

Cellular networks have evolved from earlier second generation networks in which the main communication is speech calls, to third (and subsequent) generation networks where data and multimedia communication is also available. Typical examples of second generation networks include GSM, TDMA etc. technologies, and third generation networks are based on technologies like UMTS / WCDMA, cdma 1x etc. In third generation networks, services like video telephony, audio or video streaming, MMS connections with picture, photo, text and/or voice transmission are offered. Each of these different services places different demands on the resources of the cellular network and the user terminal, and requires different radio conditions concerning available transmit power, free bandwidth, tolerable error rates during the transmission, current state of interference from other sources etc.

When a subscriber asks for a particular service, say video telephony, it is not certain that the requested connection can be successfully set up everywhere and all the time. This is because the resources required and the radio conditions for video telephony may not be available or suitable at that time and place.

The end result is that the subscriber can sometimes set up a video telephony connection, and in other times the network cannot offer this service (or can only offer a degraded connection where the video and speech qualities are poor). This uncertainty also applies to the geographical location of the subscriber making the service request, depending on where he is relative to the base stations, relative to other sources of interference etc.

Hence, cellular network operators need to test their networks to find out when and where which types of service are available, and about the respective quality. These results are difficult to deduce from theoretical calculations, because the network and interference status strongly varies with time and place.

Tests to establish whether a particular type of service can be offered by the network at a particular time and at a particular place and to assess the related quality are normally based on an "intrusive method", i. e. a real connection is made for the service to be tested. In the example of a speech call a test device is placed at a given place and at the desired time a real speech call connection to another subscriber is set up. The connection is monitored and the information thus obtained is further analyzed to assess the quality of the network.

While this intrusive method has been widely used for testing speech calls in second generation networks, it has important drawbacks when used for testing the different services offered by third (and subsequent) generation networks. The main problem is that the intrusive method requires an actual connection being set up and therefore uses up some of the precious resources of the network. At the same time, it generates additional interference. Therefore, the intrusive tests disturb the network under test. As an example, a radio cell in WCDMA today can only cope with three or four 384 kbps connections, depending on the distance between the subscriber and the radio cell, and the actual state of interference. Obviously, setting up an actual 384 kbps connection as in the intrusive test will use up one of these three (or four) available connections, leading to a substantial loss of network capacity and therefore subscriber revenue.

The problem is enhanced because for each type of service (video telephony, 384 kbps data connection, streaming, speech call etc.) one needs to set up at least one connection to see if the service is available and if its quality is good.

There is another known method of testing that avoids these problems, namely "non-intrusive" testing, whereby no test connection is set up. Instead, the test system tries to monitor real subscriber traffic, and deduce from it the quality of the connection.

However, if the condition of the network is such that the subscriber cannot even set up his desired connection, then there is nothing for the non-intrusive systems to monitor. Therefore, it is difficult to reliably test the network quality with the non-intrusive method.

US 5,394,540 (AT&T) relates to a system for testing communication network components. For this purpose, a network simulator simulates the message communication among relevant network entities, whereas transmitted messages are intercepted, and subsequently examined, changed and/or deleted. The system may e. g. be employed for testing a mobile switching center (MSC). In this framework it is possible to test the reliability of an accomodation of handoffs of mobile stations if a call setup has to be handled at the same time. For that purpose the network simulator sends a handoff request to the MSC after each transmitted message; subsequently the results and/or the message flow are observed.

US 2002/072358 A1 (Ericsson) describes a process as well as an arrangement for monitoring performance information of a wireless communication system. For that purpose, a network performance monitor is employed that is configured to monitor messages on a communication interface of a node of the network and that is capable of analyzing the monitored messages and of generating real-time performance data based on this analysis. For example, messages relating to the call set up may be obtained by employing an interface between a sending base station controller (BSC) and a mobile switching center (MSC). From these messages performance data about successful or unsuccessful call set up attempts may be derived. It is possible to insert test messages into the system and to monitor the processing of these test messages by the system.

### Summary of the invention

It is the object of the invention to create a method of testing a cellular network system pertaining to the technical field initially mentioned, that allows for reliably testing the network quality with reduced use of network resources.

The solution of the invention is specified by a method, a device and a cellular network system according to the features of respective claims 1, 8 and 10. According to the invention, for testing the cellular network system the subscriber's request and the network management's answer are monitored and analyzed.

Monitoring and analyzing the information exchanged during the negotiation phase, namely the subscriber's request and the corresponding answer of the network management yields information about the network status even in cases where no communication link for the requested service may be established. This may be the case if the network quality is impaired, e. g. due to high interference or a non-optimal location of the subscriber. At the same time, the traffic caused in the cellular network by the negotiation phase is marginal, independent of the requested type of service. Therefore, reliable and accurate real-time testing of any type of service is enabled without having to use up network capacity.

In particular, the subscriber's request comprises a description of the desired communication link, including link parameters such as destination, type of service and/or required quality. These link parameters are monitored and included in the analysis. The description may be part of a so called "PDP context". This PDP context contains for example a subscriber request like "I want a streaming service, with uplink / downlink guaranteed throughput of 64/384 Kbps and maximum transfer delay of 20ms". All these link parameters may be taken into account in the subsequent analysis. For the functioning of the invention it is irrelevant, whether the other subscriber (destination of the link) is a subscriber to the cellular network system itself or to another network that is in some way linked to the cellular network system.

The network management's answer monitored and analyzed by the inventive method corresponds e. g. to either acceptance of the desired communication link, acceptance of a degraded link or rejection of the link. The answer depends on current network parameters such as a transmit power at a base station, an error rate under current radio conditions and/or a number of active connections. The actual answer is included in the analysis. If the network management cannot accept the desired link but offers a degraded link to the subscriber, its answer includes the link parameters of the offered degraded link (or similar information that allows for deciding about accepting or rejecting the degraded link on the subscriber's side).

The assessment whether the requested service is available at a given time and place is difficult to predict by theoretical models. This becomes clear, if for example one takes into account that a subscriber far away from the cell asking for a 384Kbps service could be rejected, but another one nearer the cell asking for the same service at the same time could be accepted (because the second one needs less transmit power than the first one).

Therefore, the network management features dedicated hard- and/or software for assessing the network quality in order to answer the subscriber's request. One of the parameters the network may use for doing this is the transmit power at the respective base station. As more and more load and subscribers appear, the transmitter will try to push up its transmitted power, especially for subscribers that are far away from the base station. While this achieves the aim of reaching the far away subscribers, it generates at the same time more interference for all the other subscribers in the cell as well as in neighboring cells, which in turn will introduce higher error rates into the transmission. So, the network management will start to reject service requests (or only offer degraded services) when the transmitter power used is approaching a given limit. Other events that may trigger the rejection of service requests are unbearable error rates in transmissions, the network management running out of channelisation codes (unique codes temporarily assigned to each subscriber in the cell) or the combined traffic from different cells being that high that the packet transmission delay in the core network (i. e. not in the radio link) exceeds a certain threshold (depending on the requested service).

The inventive method exploits the complex assessment of the network management by using its answer to the subscriber request for gathering information about the service availability at a given time and place. Therefore, it is not necessary to perform the complex determinations of network quality again for test purposes.

In particular, exclusively the subscriber's request and the network management's answer are monitored and analyzed for testing the cellular network. No further information, e. g. data relating to an actual communication link is accumulated. Thereby, the amount of data to be stored and subsequently analyzed is kept small and the analysis is simplified. Another very important aspect is to eliminate the need for establishing any actual communication link for test purposes causing substantial traffic on the network and using up bandwidth.

Alternatively, the data relating to the subscriber's request and the network management's answer is analyzed in combination with further information, e. g. relating to actual communication links or to external tests of the network.

Preferably, the request sent to the network management is a dedicated test request and the set up process is actively terminated after the negotiation phase, before an actual link is established. Compared to an intrusive test system, where the link is established after the negotiation phase, the inventive method thereby substantially avoids network traffic. However, it is still known whether the requested service is available from the network at that time and place, and what the quality of the connection is, because that information can be deduced from the information exchanged during the negotiation phase. Furthermore, test requests may be systematically initiated at a predetermined time, from a predetermined place and concerning a predetermined type of service. Therefore, compared to non-intrusive systems or to just monitoring the requests of the usual subscribers, systematical tests may be performed at any time from any place and they may be repeated until a certain statistical reliability is reached.

Information about the quality of the cellular network system may be exclusively extracted from test requests and the corresponding answers of the network management, or data obtained from test requests may be combined with data obtained from regular communication links on the network, e. g. in the network management center itself. In this case, the test requests and the network management center data complement each other. The test requests may yield precise geographical information about the problem areas, whereas the network management data is much less precise on geography. The test requests may be chosen such as to selectively complete statistical information concerning certain places, time periods or types of services where the amount of data available from regular communication links is not sufficient.

Preferably, the test request is chosen such that best services are tested that are currently offered by the cellular network system, i. e. instead of performing a fixed predetermined request or set of requests the choice of the test request to be performed is based on information or estimations about the current state of the network.

Advantageously, a plurality of dedicated test requests relating to different types of communication links are sent to the network management. Thereby, it is possible to test the availability and quality of different services (at the desired time and place) by conducting different negotiations for each service type, without actually set up any connection after the negotiation phases.

Preferably, the plurality of dedicated test requests as well as corresponding answers of the network management are statistically analyzed in order to yield information about service availability and/or service quality at a respective place of the subscriber sending the test requests. Sending a plurality of test requests relating to different types of communication links, e. g. concerning the required bandwidth and the maximum error rate, allows for precisely assessing not only the availabilities of the requested services but also the expected service qualities. This is enabled by statistically combining the information about the network management's answers in respect of the requests for the services. If for example the network management does not allow for establishing a high-bandwidth streaming connection this may be an indication that the quality of links that may just be established is a border-line case or actually be in danger of not being fulfilled, i. e. availability and quality information for untested combinations of link parameters is interpolated from the results of the tested communication links.

In particular, statistical analysis of the data obtained from the requests and corresponding answers may yield information about "cell shrinkage" in the cellular network system. The weakest link in all CDMA based networks (including UMTS/WCDMA) is the performance under load. As load (subscriber demands) increases, there is a marked decrease in network capacity etc., due to the additional interference generated by more subscribers. The actual result on the ground is that the cell coverage "shrinks", i. e. the effective radius of a radio cell decreases with increasing load. Since, in a real WCDMA network, the coverage of different cells overlap one another somewhat (and hence interfere with one another), it becomes quite difficult to predict theoretically if there will be "holes" in the network as load increases, and if so how big and where these holes are. The test system, using the inventive method, is deployed at peak traffic hours, and asks for different services at a particular place or along busy roads. The result shows where the holes are, if any. Then the network planning would have to be amended to minimize these holes. Since holes appear mostly only at peak traffic hours, it is particularly advantageous that the inventive method does hardly introduce any additional load into the network.

A device for testing a cellular network system comprises
a) a transmitter for communicating with the cellular network system;
b) a controller for generating subscriber's requests for communication links on the cellular network system; and
c) a memory for storing information about generated subscriber's requests and corresponding answers from a network management,
and is further defined by the characterizing features of claim 8.

Due to the reduced data obtained from the inventive process compared to processes where actual communication has to be monitored, the inventive device may be of a rather simple design and therefore inexpensive. This allows for utilizing a larger number of devices leading to better statistics. The analysis of the stored information may be performed by the device or the information may be transmitted to a central unit processing (and combining) the information from several devices. In the latter case the memory substantially works as a buffer storage for the gathered data.

To reap the "little network loading" benefit of the invention, the controller of the device is programmed such as to automatically actively terminate set up processes initiated by the test requests, before actual communication links are established. Thereby, the traffic caused on the network by the test device is minimized.

Alternatively, the set up process is automatically actively terminated by the network management, e. g. depending on some special parameters communicated to the network management together with the user's request or depending on the source or destination of the test request, e. g. all the requests for a communication from given sources or with a given destination are automatically terminated upon the network management's answer to the user's request. However, if the termination of the set up process is initiated by the test device, it is not required that the network management is modified in any way in order to ensure that for test requests the set up is terminated before an actual communication link is established.

Advantageously, the controller has access to a table of link parameters such as destination, type of service and/or required quality corresponding to different communication links. This allows for (preferably automatically) generating a plurality of different test requests.

Alternatively, the link parameters for the test requests are generated dynamically, in particular depending on the result of the negotiations that have already been performed. For example, if a request for a 384 kbps link is rejected, the test device is programmed to automatically request for a 128 kbps link. If that again is rejected, it requests for a 64 kbps link etc. Thus the best possible link currently offered by the network can be determined.

A cellular network system in which the invention may be realized comprises
a) a network management for establishing communication links between a subscriber terminal of the network system and another subscriber, whereby the network management is capable of receiving subscriber's requests for connections and of sending back an answer to the subscriber in a negotiation phase prior to the actual establishment of an actual link,
b) a monitoring device for monitoring and analyzing the subscriber's request and the network management's answer,
and is further defined by the characterizing features of claim 10.

The monitoring device is either coupled to the network management, a usual subscriber terminal, such as e. g. a cellular phone, or integrated in a test device as described above.

Other advantageous embodiments and combinations of features come out from the detailed description below and the totality of the claims.

### Brief description of the drawings

The drawings used to explain the embodiments show:
- Fig. 1: a flow chart representing the set up of a communication link in a cellular network;
- Fig. 2: a flow chart representing an inventive method of testing the cellular network; and
- Fig. 3: a schematic representation of a test device according to the invention and its interaction with the cellular network.

In the figures, the same components are given the same reference symbols.

### Preferred embodiments

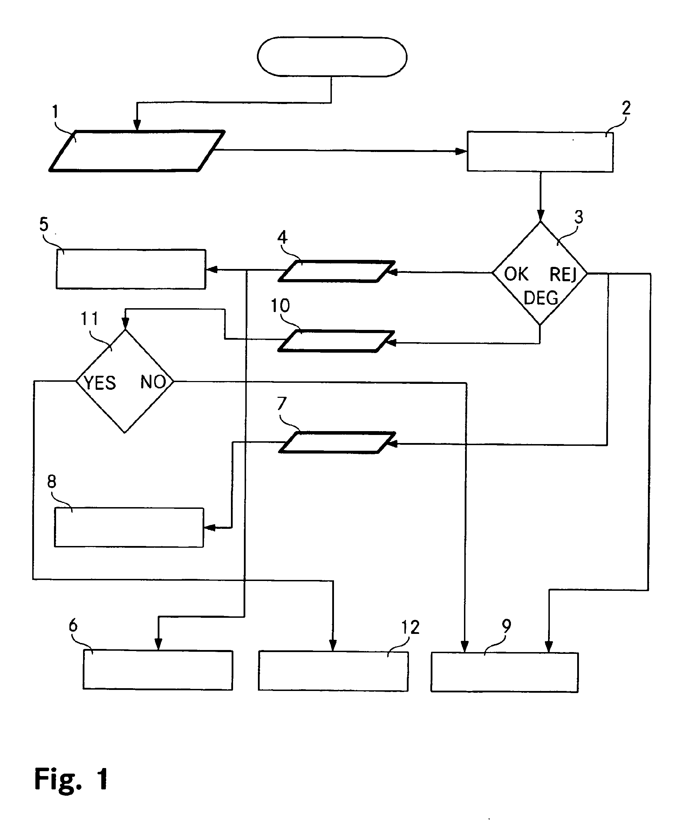

The Figure 1 is a flow chart representing the set up of a communication link in a cellular network in which the inventive method is applicable. The process steps carried out by the subscriber terminal are displayed on the left, the process steps carried out by the network management are displayed on the right. The set up process is initiated by the user terminal by sending a request 1 for a connection with another subscriber (of the same network or of another network connected to the cellular network) to the network management. Among other data, the request 1 contains the following information about the requested communication link:
a. the destination (other subscriber);
b. the type of service (voice, SMS, MMS, video telephony, data transfer, audio/video streaming etc.);
c. the requested uplink data rate;
d. the requested downlink data rate;
e. the maximum transfer delay;
f. the tolerable error rate; and/or
g. any other parameters specific to the requested link.

The actual form of the request 1 depends on the standard of the cellular network. For example, in case of a UMTS network the information of the request is contained in the so-called PDP context.

The data of the request 1 is received from the network management and used in process step 2 for gathering information that is relevant for the setting up of the requested communication link. This information describes the current state of the network and includes
i. the transmit power at the competent base station;
ii. the error rate for current radio conditions;
iii. the current number of users in the subscriber's cell;
iv. the current packet transmission delay between the subscriber's cell and the destination; and/or
v. other relevant information about the current state of the network, e. g. radio conditions in neighbor cells.

This information is utilized in decision 3 which may have three different results:
- OK:: It is currently possible to establish the requested communication link;
- DEG:: it is currently not possible to establish the requested communication link but a degraded link (less throughput, lower actualization rate etc.) for the same service type is possible;
- REJ:: it is currently not possible to establish a communication link for the requested service.

What kind of degraded links are offered to the subscriber if the requested communication link cannot be established depends on the actual implementation of the cellular network. However, in any case there are definite criteria that are known to the network operator.

If the result of decision 3 is OK a corresponding answer 4 is sent back to the subscriber terminal, where it is received and accordingly processed (step 5). This finishes the negotiation phase. At the same time the communication link is established (step 6) by the network management.

If the result of decision 3 is REJ (rejection of the requested communication) a corresponding answer 7 is sent back to the subscriber terminal, where it is further processed (step 8), e. g. displayed to the user or triggering another attempt for establishing a communication. At the same time, the network management terminates the connection to the subscriber terminal (step 9).

If the result of decision 3 is DEG (degraded link available) an answer 10 is sent back to the subscriber terminal. This answer 10 contains information about the properties of the degraded link, in principle the values of the above mentioned parameters a-g. These link parameters are used by the subscriber terminal in decision 11 where it is decided whether the offered degraded communication link is still acceptable. The decision 11 may be based on predetermined values about tolerable restrictions for a particular service or it may include querying the user. If the answer of decision 11 is YES the negotiation phase is finished and the communication link is established by the network management (step 12) after it is informed about acceptance of the degraded link. If the answer of decision 11 is NO the user terminal informs the network management, whereon the connection to the subscriber terminal is terminated (step 9).

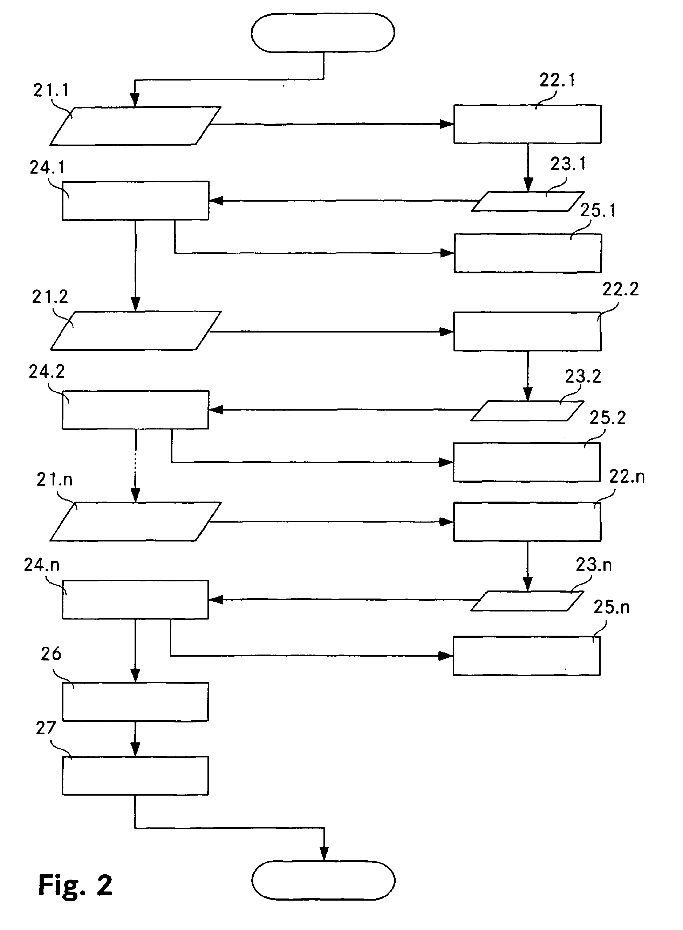

The Figure 2 is a flow chart representing an inventive method of testing the cellular network by utilizing a test device. Again, the process steps carried out by the test device (corresponding to the subscriber terminal) are displayed on the left, the process steps carried out by the network management are displayed on the right. The testing process is initiated by the test device by sending a first test request 21.1 to the network management. The test request 21.1 is a usual request for a communication link specifying among others the above mentioned link parameters a-g. These parameters are read from a table containing information about all the test requests to be carried out. As described above, the request 21.1 is processed by the network management (step 22.1) as is any request from a user terminal, resulting in an answer 23.1 which is either OK, DEG (including the degraded link parameters) or REJ. This answer 23.1 is sent back to the test device where it is stored in a memory (step 24.1). If the answer is OK or DEG, the test device requests from the network management to terminate the set up process (step 25.1) before a communication link is established. If the answer is REJ the set up process is anyway terminated by the network management.

After that, a second test request 21.2 (concerning another type of service or different link parameters, e. g. corresponding to lower requirements on the network quality compared to the previous request) is sent to the network management and again processed (step 22.2) to yield the network management's answer 23.2. This answer 23.2 is again stored at the test device (step 24.2) and the set up process is terminated (step 25.2). This sequence of steps 21-24 is repeated a number n of times until the answer 23.n to the last test request 21.n is stored in the memory of the test device (step 24.n).

Subsequently, the data stored in the memory of the test device is processed to yield information about the current network status (step 26). This information is forwarded to a central unit where it may be further analyzed and combined with data obtained from other test devices (step 27). The last two steps may be carried out by the test device, or the stored data about the requests 21 and answers 23 is transmitted to an analysis unit, which may be a central unit for the whole cellular network or for a certain region of the network.

After (or during) a series of test requests, the test device may be transported to another location in order to obtain information from different places. The series of test requests may be periodically repeated in order to obtain information about the network status at different times of the day as well as about temporal variations of the network quality and availability.

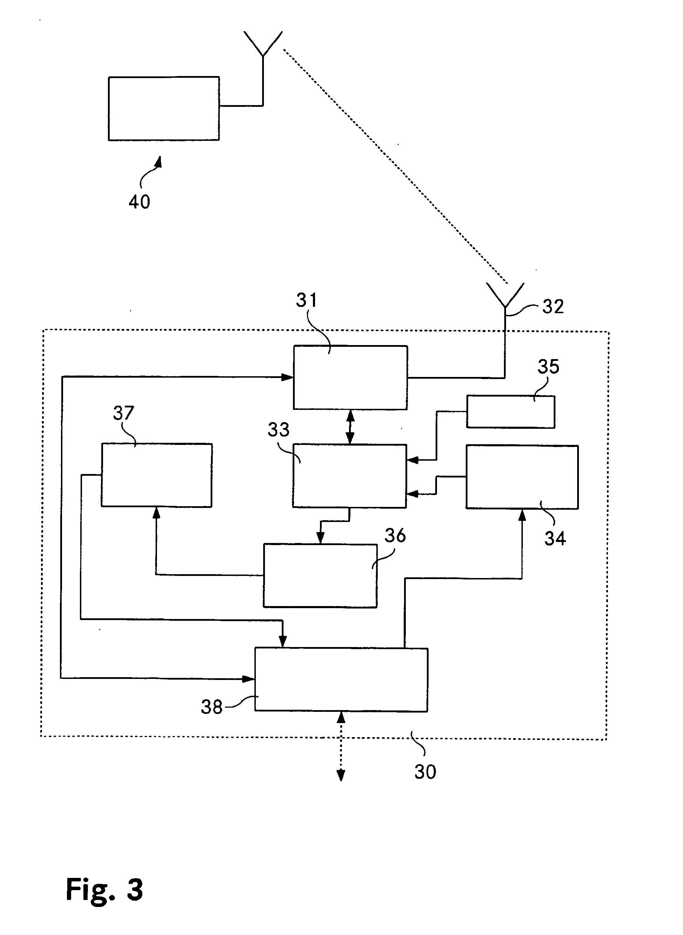

The Figure 3 is a schematic representation of a test device according to the invention and its interaction with the cellular network. The test device 30 comprises a usual transmitter 31 connected to an antenna 32. The transmitter 31 corresponds e. g. to the transmitter of a usual cellular phone for the cellular network to be tested. Additionally, the test device 30 contains a controller 33 which controls the test procedure. It has access to a table stored in instruction memory 34 which contains the link parameters of the connections to be negotiated with a network management. The network management is reached by connecting to a base station 40 of the network. The setting up of the connections as defined in the table is triggered by a timer circuit 35 as well connected to the controller 33.

Via transmitter 31 the request for a connection with a set of link parameters stored in the table is sent to the base station 40 and further to the network management. As soon as the answer of the network management 40 (OK, REJ or DEG and link parameters of the offered degraded connection) is received by the transmitter 31 it is forwarded to the controller 33. The controller 33 immediately instructs the transmitter 31 to request the set up process to be terminated by the network management before an actual communication link is established.

The parameters of the requests together with the network management's answers are stored in result memory 36. An analysis circuit 37 accesses the result memory 36 and analyzes the data of a plurality of test negotiations. The results of the analysis are transmitted to an input/output (I/O) circuit 38 for communication to a central analysis unit of the network operator. The communication may take place by any communication means, e. g. by the transmitter 31 built into the test device 30. Furthermore, the I/O circuit 38 is connected to the instruction memory 34 such that the set of instructions may be changed.

The following table lists exemplary sets of link parameters corresponding to a plurality of test requests to be effected at a given time and place, together with two exemplary answer sets obtained at different times and/or places. Please note that the streaming services listed allow for a large maximum delay because several seconds of content are buffered in the receiving device. However, allowed variations of the delay time may be limited such that they have to be taken into account during assessment of the network quality.

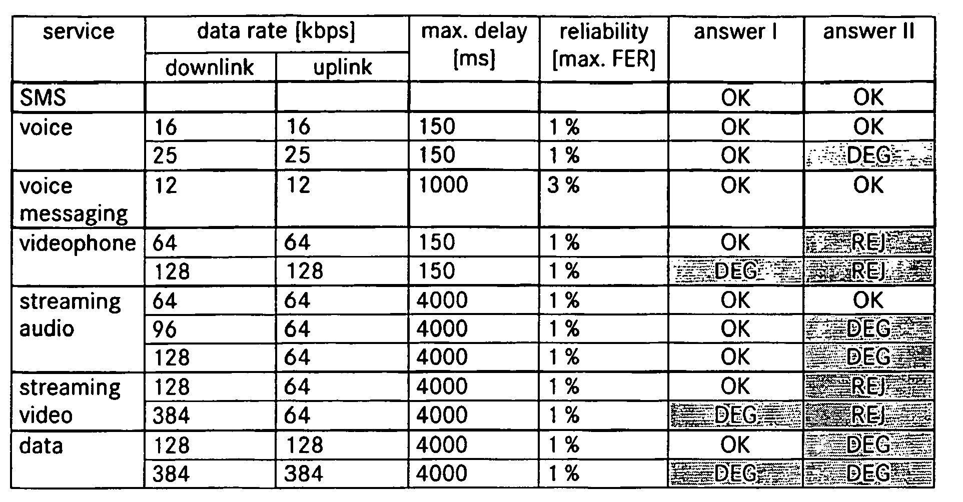

The reliability is stated in the maximum frame error rate (FER), the maximum delay relates to the whole communication channel, not only the radio link to the base station. The listed exemplary results may be interpreted as follows: obviously, the answers II relate to a more critical network status. From answer set I it emanates that the best communications that could be established at the given moment from the given place are 128/128 kbps (UL/DL) (data) connections with a maximum delay of 4 s and 64/64 kpbs (UL/DL) (videophone) connections with a maximum delay of 150 ms. For both kinds of services there was no possibility to establish a communication link on the next higher service levels tested. Instead, a degraded communication link was offered. If the degraded link parameters (not displayed in the table) are better than the link parameters of the best available service level, it may be assumed that they correspond to the best possible link. Otherwise, the lower service level corresponds to the best possible link.

Similarly, from answer set II it emanates that the best possible communications that could be established were a 16/16 kpbs (UL/DL) (voice) link with a maximum delay of 150 ms and a 64/64 kbps (UL/DL) (streaming audio) link with a maximum delay of 4000 ms. As for the requests concerning data connections, both these requests have been answered by an offer for a degraded link. The link parameters of the degraded link, which are below the tested service levels, therefore correspond to the best possible data communication link.

The results obtained from the same place but at different times may be statistically analyzed in order to detect short-time and long-time fluctuations of service quality. The results obtained at the same time but from different places may be statistically analyzed in order to detect "holes" in the network where the service quality does not attain a certain service level desired by the network operator.

Instead of employing fixed tables as described above, it is possible to dynamically generate sets of link parameters. The test requests are started at a given level of service quality. If the test requests are successful (i. e. the answer of the network management is OK) further tests are ran on a higher service level, conversely if the test requests are not successful (especially if the answer is REJ) the tests are ran on lower service levels (if available), until the best possible level of a given service type is detected.

The analysis of the recorded data may take place entirely within the test device, i. e. the result of a series of test requests is a report about the current status of the network at the given time and the given place. Alternatively, a first part of the analysis process takes place in the test device, whereon the intermediate result produced is forwarded to a central processing unit of the network. Finally, the entire analysis may happen centrally, i. e. the requests and corresponding answer are stored in the result memory and forwarded as they are to the central processing unit.

Similarly, instead of monitoring the test requests and the corresponding answers of the network management at the test device this information may be gathered and stored centrally at the network management, thereby avoiding the need for transmitting test and/or analysis results from the test devices to the central processing unit. All the information that has to be stored, namely the requests and the corresponding answers, is anyway available at the network management; the information that data about a certain negotiation phase has to be stored for further processing is transmitted to the network management either in the context of the test request (destination, dedicated flag as mentioned above) or a table of identification numbers of the test devices is kept in a database of the network management. Thereby, the data about negotiations of all the terminals having an identification number that is present in the table will be automatically stored.

In summary, it is to be noted that the invention creates a method of testing a cellular network system that allows for reliably testing the network quality with reduced use of network resources.

## Claims

1. A method of testing a cellular network system in which setting up a communication link between two subscribers starts with a negotiation phase comprising the following two steps:
a) one of the subscribers sends a request (1; 21) for a connection with the other subscriber to a network management;
b) the network management sends back an answer (4, 7, 10; 23) to the subscriber;
whereon the link can be established if the network management's answer (4, 7, 10; 23) satisfies certain conditions, where the method is **characterized in that** for testing the cellular network system the subscriber's request (1; 21) and the network management's answer (4, 7, 10; 23) are monitored and analyzed; **in that** the request sent to the network management is a dedicated test request (21); and **in that** the set up process is actively terminated after the negotiation phase, before an actual link is established.

2. The method according to claim 1, **characterized in that** the subscriber's request (1; 21) comprises a description of the desired communication link, including link parameters such as destination, type of service and/or required quality, and **in that** the link parameters are included in the analysis.

3. The method according to claim 1 or 2, **characterized in that** the network management's answer (4, 7, 10; 23) corresponds to either acceptance of the desired communication link, acceptance of a degraded link or rejection of the link depending on current network parameters such as a transmit power at a base station, an error rate under current radio conditions and/or a number of active connections and **in that** the actual answer (4, 7, 10; 23) is included in the analysis.

4. The method according to one of claims 1 to 3, **characterized in that** for testing the cellular network exclusively the subscriber's request (1; 21) and the network management's answer (4, 7, 10; 23) are monitored and analyzed.

5. The method according to one of claims 1 to 4, **characterized in that** the test request (21) is chosen such that best services are tested that are currently offered by the cellular network system.

6. The method according to one of claims 1 to 5, **characterized in that** a plurality of dedicated test requests (21.1...21.n) relating to different types of communication links are sent to the network management.

7. The method according to claim 6, **characterized in that** the plurality of dedicated test requests (21.1...21.n) as well as corresponding answers (23.1...23.n) of the network management are statistically analyzed in order to yield information about service availability and/or service quality at a respective place of the subscriber sending the test requests (21.1...21.n).

8. A device (30) for testing a cellular network system comprising
a) a transmitter (31) for communicating with the cellular network system;
b) a controller (33) for generating subscriber's requests (21) for communication links on the cellular network system; and
c) a memory (36) for storing information about generated subscriber's requests (21) and corresponding answers (23) from a network management,
**characterized in that** the subscriber's requests are dedicated test requests, and the controller (31) is programmed such as to automatically actively terminate set up processes initiated by the test requests (21) before actual communication links are established.

9. The device according to claim 8, **characterized in that** its controller (31) has access to a table of link parameters such as destination, type of service and/or required quality corresponding to different communication links, in order to generate a plurality of different test requests (21.1...21.n).

10. A cellular network system comprising
a) a network management for establishing communication links between a subscriber terminal of the network system and another subscriber, whereby the network management is capable of receiving subscriber's requests (1; 21) for connections and of sending back an answer (4, 7, 10; 23) to the subscriber in a negotiation phase prior to the actual establishment of an actual link,
b) a monitoring device for monitoring and analyzing the subscriber's request (1; 21) and the network management's answer (4, 7, 10; 23);
**characterized** that the monitoring device is adapted to send dedicated test requests (21), and in that the monitoring device is adapted to be controlled in such a way that set up processes initiated by the test requests (21) are automatically actively terminated before actual communication links are established.

## Patentansprüche

1. Verfahren zum Testen eines Mobilfunknetzes, bei dem das Aufbauen einer Kommunikationsverbindung zwischen zwei Teilnehmern mit einer Verhandlungsphase beginnt, die die beiden folgenden Schritte umfasst:
a) einer der Teilnehmer sendet eine Anfrage (1; 21) für eine Verbindung mit dem anderen Teilnehmer an eine Netzwerkverwaltung;
b) die Netzwerkverwaltung sendet eine Antwort (4, 7, 10; 23) zurück zu dem Teilnehmer;
worauf die Verbindung hergestellt werden kann, wenn die Antwort (4, 7, 10; 23) der Netzwerkverwaltung bestimmte Bedingungen erfüllt, wobei das Verfahren **dadurch gekennzeichnet ist, dass** zum Testen des Mobilfunknetzes die Anfrage (1; 21) des Teilnehmers und die Antwort (4, 7, 10; 23) der Netzwerkverwaltung aufgezeichnet und analysiert werden; dass die zu der Netzwerkverwaltung versendete Anfrage eine dezidierte Test-Anfrage (21) ist; und dass der Aufbauprozess nach der Verhandlungsphase aktiv beendet wird, bevor eine tatsächliche Verbindung hergestellt wird.

2. Verfahren nach Anspruch 1, **dadurch gekennzeichnet, dass** die Anfrage (1; 21) des Teilnehmers eine Beschreibung der gewünschten Kommunikationsverbindung umfasst, die Verbindungsparameter wie Ziel, Art des Dienstes und/oder erforderliche Qualität enthält, und dass die Verbindungsparameter in der Analyse enthalten sind.

3. Verfahren nach Anspruch 1 oder 2, **dadurch gekennzeichnet, dass** die Antwort (4, 7, 10; 23) der Netzwerkverwaltung abhängig von aktuellen Netzparamtern wie etwa einer Sendeleistung an einer Basisstation, einer Fehlerrate unter aktuellen Funkbedingungen und/oder einer Anzahl aktiver Verbindungen entweder einer Annahme der gewünschten Kommunikationsverbindung, einer Annahme einer verschlechterten Verbindung oder einer Zurückweisung der Verbindung entspricht und dass die tatsächliche Antwort (4, 7, 10; 23) in der Analyse enthalten ist.

4. Verfahren nach einem der Ansprüche 1 bis 3, **dadurch gekennzeichnet, dass** zum Testen des Mobilfunknetzes ausschließlich die Anfrage (1; 21) des Teilnehmers und die Antwort (4, 7, 10; 23) der Netzwerkverwaltung aufgezeichnet und analysiert werden.

5. Verfahren nach einem der Ansprüche 1 bis 4, **dadurch gekennzeichnet, dass** die Test-Anfrage (21) so gewählt wird, dass beste Dienste getestet werden, die aktuell von dem Mobilfunknetz angeboten werden.

6. Verfahren nach einem der Ansprüche 1 bis 5, **dadurch gekennzeichnet, dass** mehrere dezidierte Test-Anfragen (21.1....21.n), die verschiedene Arten von Kommunikationsverbindungen betreffen, zu der Netzwerkverwaltung gesendet werden.

7. Verfahren nach Anspruch 6, **dadurch gekennzeichnet, dass** die mehreren dezidierten Test-Anfragen (21.1....21.n) sowie entsprechende Antworten (23.1....23.n) der Netzwerkverwaltung statistisch analysiert werden, um Informationen über Dienstverfügbarkeit und/oder Dienstqualität an einem jeweiligen Ort, an dem der Teilnehmer die Test-Anfragen (21.1....21.n) sendet, zu ergeben.

8. Vorrichtung (30) zum Testen eines Mobilfunknetzes, umfassend:
a) einen Sender (31) zum Kommunizieren mit dem Mobilfunknetz;
b) eine Kontrolleinheit (33) zum Erzeugen von Teilnehmeranfragen (21) von Kommunikationsverbindungen in dem Mobilfunknetz; und
c) einen Speicher (36) zum Speichern von Informationen über erzeugte Teilnehmeranfragen (21) und entsprechende Antworten (23) von einer Netzwerkverwaltung,
**dadurch gekennzeichnet, dass** die Anfragen des Teilnehmers dezidierte Test-Anfragen sind und die Kontrolleinheit (31) so programmiert ist, dass sie durch die Test-Anfragen (21) eingeleitete Aufbauprozesse aktiv beendet, bevor tatsächlich die Kommunikationsverbindungen hergestellt werden.

9. Vorrichtung nach Anspruch 8, **dadurch gekennzeichnet, dass** ihre Kontrolleinheit (31) Zugang zu einer Tabelle von Verbindungsparametern wie Ziel, Art von Dienst und/oder erforderlicher Qualität entsprechend verschiedenen Kommunikationsverbindungen besitzt, um mehrere verschiedene Test-Anfragen (21.1....21.n) zu erzeugen.

10. Mobilfunknetz, umfassend:
a) eine Netzwerkverwaltung zum Herstellen von Kommunikationsverbindungen zwischen einem Teilnehmerendgerät des Netzsystems und einem anderen Teilnehmer, wobei die Netzwerkverwaltung in einer Verhandlungsphase vor der tatsächlichen Herstellung einer tatsächlichen Verbindung Teilnehmeranfragen (1; 21) von Verbindungen empfangen und eine Antwort (4, 7, 10; 23) zu dem Teilnehmer zurücksenden kann,
b) eine Überwachungseinrichtung zum Aufzeichnen und Analysieren der Anfrage (1; 21) des Teilnehmers und der Antwort (4, 7, 10; 23) der Netzwerkverwaltung;
**dadurch gekennzeichnet, dass** die Überwachungseinrichtung dafür ausgelegt ist, dezidierte Test-Anfragen (21) zu senden, und dass die Überwachungseinrichtung dafür ausgelegt ist, dergestalt gesteuert zu werden, dass durch die Test-Anfrage (21) eingeleitete Aufbauprozesse automatisch aktiv beendet werden, bevor tatsächliche Kommunikationsverbindungen hergestellt werden.

## Revendications

1. Procédé pour tester un système de réseau cellulaire dans lequel l'établissement d'une liaison de communication entre deux abonnés commence par une phase de négociation comprenant les deux étapes suivantes :
a) l'un des abonnés envoie à un système de gestion du réseau une demande (1 ; 21) d'établissement d'une connexion à l'autre abonné ;
b) le système de gestion du réseau renvoie à l'abonné une réponse (4, 7, 10 ; 23) ; après quoi la liaison peut être établie si la réponse (4, 7, 10 ; 23) du système de gestion du réseau remplit certaines conditions, le procédé étant **caractérisé en ce que**, pour tester le système de réseau cellulaire, la demande (1 ; 21) de l'abonné et la réponse (4, 7, 10 ; 23) du système de gestion du réseau sont surveillées et analysées ; **en ce que** la demande envoyée au système de gestion du réseau est une demande de test spécialisé (21) ; et **en ce que** le processus d'établissement est interrompu de façon active après la phase de négociation et avant qu'une liaison effective ne soit établie.

2. Procédé selon la revendication 1, **caractérisé en ce que** la demande (1 ; 21) de l'abonné comprend une description de la liaison de communication souhaitée, incluant des paramètres de liaison tels que la destination, le type de service et/ou la qualité exigée, et **en ce que** les paramètres de la liaison sont inclus dans l'analyse.

3. Procédé selon la revendication 1 ou 2, **caractérisé en ce que** la réponse (4, 7, 10 ; 23) du système de gestion du réseau correspond soit à l'acceptation de la liaison de communication souhaitée, soit à l'acceptation d'une liaison dégradée, soit à un rejet de la liaison en fonction des paramètres de réseau à ce moment tels qu'une puissance d'émission au niveau d'une station de base, un taux d'erreurs dans les conditions radioélectriques à ce moment et/ou un nombre de connexions actives, et **en ce que** la réponse effective (4, 7, 10 ; 23) est incluse dans l'analyse.

4. Procédé selon l'une des revendications 1 à 3, **caractérisé en ce que**, pour tester le réseau cellulaire, on surveille et on analyse exclusivement la demande (1 ; 21) de l'abonné et la réponse (4, 7, 10 ; 23) du système de gestion du réseau.

5. Procédé selon l'une des revendications 1 à 4, **caractérisé en ce que** la demande de test (21) est choisie de façon à ce que les meilleurs services offerts à ce moment par le système de réseau cellulaire soient testés.

6. Procédé selon l'une des revendications 1 à 5, **caractérisé en ce qu'**une pluralité de demandes de tests spécialisés (21.1...21.n) concernant différents types de liaison de communication sont envoyées au système de gestion du réseau.

7. Procédé selon la revendication 6, **caractérisé en ce que** la pluralité de demandes de tests spécialisés (21.1...21.n) ainsi que les réponses correspondantes (23.1...23.n) du système de gestion du réseau sont analysées statistiquement afin de produire des informations concernant la disponibilité des services et/ou la qualité des services à l'endroit respectif où se trouve l'abonné envoyant les demandes de test (21.1...21.n).

8. Dispositif (30) pour tester un système de réseau cellulaire, comprenant :
a) un émetteur (31) pour communiquer avec le système de réseau cellulaire ;
b) une unité de commande (33) pour générer des demandes (21) de l'abonné pour des liaisons de communication sur le système de réseau cellulaire ; et
c) une mémoire (36) pour stocker des informations concernant les demandes (21) de l'abonné générées et des réponses correspondantes (23) provenant d'un système de gestion du réseau,
**caractérisé en ce que** les demandes de l'abonné sont des demandes de tests spécialisés et **en ce que** l'unité de commande (31) est programmée de façon à interrompre automatiquement de façon active les processus d'établissement déclenchés par les demandes de tests (21) avant que des liaisons de communication effectives ne soient établies.

9. Dispositif selon la revendication 8, **caractérisé en ce que** son unité de commande (31) a accès à une table de paramètres de liaison tels que la destination, le type de service et/ou la qualité exigée correspondant à différentes liaisons de communication, afin de générer une pluralité de demandes de tests différentes (21.1...21.n).

10. Système de réseau cellulaire comprenant :
a) un système de gestion du réseau pour établir des liaisons de communication entre un terminal d'abonné du système de réseau et un autre abonné, le système de gestion du réseau étant capable de recevoir des demandes de connexion (1 ; 21) de l'abonné et de renvoyer à l'abonné une réponse (4, 7, 10 ; 23) lors d'une phase de négociation précédant l'établissement effectif d'une liaison effective,
b) un dispositif de surveillance pour surveiller et analyser la demande (1 ; 21) de l'abonné et la réponse (4, 7, 10 ; 23) du système de gestion du réseau ;
**caractérisé en ce que** le dispositif de surveillance est apte à envoyer des demandes de tests spécialisés (21) et **en ce que** le dispositif de surveillance est apte à être commandé de façon à ce que des processus d'établissement déclenchés par des demandes de tests (21) soient automatiquement interrompus de façon active avant que des liaisons de communication effectives ne soient établies.
